Europäisches Patentamt

European Patent Office

Office européen des brevets

(19)

(11) Veröffentlichungsnummer: **0 233 516**
A2

## (12) EUROPÄISCHE PATENTANMELDUNG

(21) Anmeldenummer: 87101142.5

(22) Anmeldetag: 28.01.87

(51) Int. Cl.³: **B 29 C 61/06**
//B29L23:00

(30) Priorität: 15.02.86 DE 3604884

(43) Veröffentlichungstag der Anmeldung:
26.08.87 Patentblatt 87/35

(84) Benannte Vertragsstaaten:
AT BE CH ES FR GB IT LI NL SE

(71) Anmelder: REHAU AG + Co
Rheniumhaus
D-8673 Rehau(DE)

(72) Erfinder:
Der Erfinder hat auf seine Nennung verzichtet

(54) Schrumpfschlauch aus Kunststoff.

(57) Die Erfindung betrifft einen mehrschichtigen Schrumpfschlauch aus Kunststoff zur Ummantelung von Substraten. Der zuvor aufgeweitete Schlauch wird dabei durch Thermorückfederung wenigstens einer seiner Schichten auf dem zu ummantelnden Substrat festgelegt. Das Kennzeichnende der Erfindung wird darin gesehen, daß eine Schlauchschicht aus geschäumtem Kunststoffmaterial besteht, während die andere Schlauchschicht aus kompaktem Kunststoffmaterial gebildet ist. Beide Schlauchschichten sind durchgehend über den gesamten Schlauchumfang fest miteinander verbunden und in dem derart geschaffenen Verbund miteinander aufgeweitet worden.

EP 0 233 516 A2

Croydon Printing Company Ltd.

# SCHRUMPFSCHLAUCH AUS KUNSTSTOFF

Die Erfindung betrifft einen Schrumpfschlauch aus Kunststoff zur Ummantelung von Substraten, wobei der aufgeweitete Schlauch durch Thermorückfederung auf dem zu ummantelnden Substrat festlegbar ist.

Schrumpfschläuche, Schrumpfkapseln und dgl. aus Kunststoff sind umfangreich bekannt. Sie werden insbesondere zum Überziehen von elektrischen, elektronischen usw. Bauteilen verwendet, um dort die entsprechende Isolierungswirkung gegenüber der Außenatmosphäre herbeizuführen. Ihre Wirkungsweise ist darin zu sehen, daß nach der Erzeugung des Grundschlauches dieser ggf. unter Wärmeeinwirkung aufgeweitet und im aufgeweiteten Zustand unter Einfrieren der Aufweitspannungen gehalten wird. Wird ein solcher aufgeweiteter Schlauch über ein Substrat gezogen bzw. wird ein solches Substrat in das Innere eines derart aufgeweiteten Schlauches oder Schlauchstückes eingesetzt und wird der Schlauch oder das Schlauchstück anschließend erwärmt, so werden die eingefrorenen Aufweitspannungen freigesetzt und der Schlauch tendiert dazu, seine ursprüngliche Form vor der Aufweitung wieder anzunehmen. Dieses Zurückschrumpfen ergibt die Möglichkeit, das Substrat so fest mit dem Schlauch zu umhüllen, daß keine Luftschicht zwischen der Oberfläche des Substrates und der Isolation verbleibt, so daß dort beispielsweise im elektrischen Bereich keine Glimmerscheinungen oder Überschläge auftreten können.

Die Herstellung eines solchen Schrumpfschlauches ist in der DD-PS 16 170 beschrieben. Dort wird ein aus Polyvinylchlorid weich bestehender Schlauch unter Wärmeeinwirkung durch Zuführung von Pressluft aufgeweitet und in einer gekühlten Kalibriervorrichtung zur Stabilisierung und Einfrierung der Schrumpfspannungen fixiert.

Blatt 2

In der DE-OS 2 344 086 ist ein wärmeerholbarer Gegenstand beschrieben, welcher aus zwei hohlen Komponenten aufgebaut ist,
die koaxial zueinander liegen. Die erste Komponente ist dabei
ein Elastomer und gegenüber ihren natürlichen Abmessungen deformiert. Die zweite Komponente ist innerhalb der ersten Komponente angeordnet und besteht aus einem Material, das beim
Erwärmen so weit erweicht wird, daß das Zurückschrumpfen der
ersten Komponente ermöglicht wird, ohne daß die zweite Komponente fließfähig wird. Beide Komponenten stehen in festem Kontakt zueinander, sind z.B. miteinander umfangsflächig verklebt.

Die erweichte zweite Komponente kann sich derart um das zu
überziehende Substrat legen, daß ein vollständiger Abschluß
ermöglicht wird.

Ein entsprechender Aufbau eines Schrumpfelementes ist in der
DE-OS 29 14 562 beschrieben.

Aus der DE-OS 1 479 648 ist ein wärmeschrumpfbarer, mehrschichtiger Überzug bekannt, bei dem die dem zu überziehenden
Gegenstand zugewandte Schicht aus einem nicht kristallinen Material, z.B. einem Fett oder Kitt besteht. Bei der Wärmeapplikation auf den schrumpfbaren Überzug erweicht die dem zu überziehenden Gegenstand zugewandte Schicht aus nichtkristallinem
Material und füllt die Poren bzw. Unebenheiten des zu überziehenden Substrats aus. Auch auf diese Weise kann eine vollständige Abschottung des Substrates mit isolierender Wirkung
nach außen erzielt werden.

Die bekannten Schrumpfschläuche werden in der Regel durch Einblasen von Pressluft aufgeweitet, wobei die kompakte Schlauchhaut eine ungefährdete Beaufschlagung des Schlauchinneren mit
der Pressluft ermöglicht.

Blatt 3

Gegenüber diesem Stand der Technik hat sich die Erfindung die Aufgabe gestellt, einen mehrschichtigen Schrumpfschlauch aus Kunststoff anzugeben, bei welchem nicht die Isolierwirkung zum Substrat hin im Vordergrund steht, sondern der Polstereffekt von Kunststoffen gegenüber ummantelten, harten Substraten. Erfindungsgemäß wird dazu vorgeschlagen, daß die eine Schlauchschicht aus geschäumtem Kunststoffmaterial besteht, während die andere Schlauchschicht aus kompaktem Kunststoffmaterial gebildet ist, daß beide Schlauchschichten durchgehend über den gesamten Schlauchumfang fest miteinander verbunden und im derart geschaffenen Verbund miteinander aufgeweitet sind.

Mit der erfindungsgemäßen Schlauchkombination läßt sich ein Polstereffekt auch bei mit Schrumpfschläuchen überdeckten Substraten erzielen, was bisher nicht möglich war. Wesentliches Merkmal der Erfindung ist die Tatsache, daß im Aufbau der Schlauchkombination eine Schlauchschicht aus geschäumtem Kunststoffmaterial an einer Schlauchschicht aus kompaktem Kunststoffmaterial anliegt. Nur so läßt es sich erreichen, daß auch die Schlauchschicht aus geschäumtem Kunststoffmaterial aufgeweitet werden kann, wobei diesem Aufweitvorgang der Druck eines Fluids, z.B. Pressluft, zugrunde liegt. Würde man versuchen, die geschäumte Schlauchschicht ohne die zweite Schlauchschicht aus kompaktem Kunststoffmaterial über einen solchen Pressdruck aufzuweiten, würde der Überdruck durch die Poren der Schaumstoffschicht hindurchdringen und entweichen, ohne daß der Aufweitungseffekt zu erzielen wäre. Bei dem den Polstereffekt erzielenden geschäumten PVC-Schlauch wird nämlich ein stark aufgeschäumtes PVC-Material verwendet, um eine möglichst niedrige Dichte und damit kostensparenden Materialeinsatz zu erhalten. Durch die relativ großen Poren dieses stark aufgeschäumten PVC-Schlauches würde der Überdruck ohne Aufweitungseffekt schnell abgebaut.

Weiteres Merkmal der Erfindung ist, daß beide Schlauchschichten durchgehend über den gesamten Schlauchumfang fest miteinander verbunden sind. Diese Maßnahme ist beispielsweise dann wesentlich, wenn die Schlauchschicht aus kompaktem Kunststoffmaterial die äußere Hülle bildet und die Schlauchschicht aus
geschäumtem Kunststoffmaterial in deren lichten Innenraum angeordnet ist. Bei der Applikation des zum Aufweiten erforderlichen Überdruckes vom Schlauchinneren her würde bei nicht
durchgehender Verbindung über den gesamten Schlauchumfang die
Pressluft durch die Poren des geschäumten Schlauches hindurchtreten, an der Innenwand der kompakten Schlauchschicht gefangen und sich von dort zwischen der kompakten Schlauchschicht
und der geschäumten Schlauchschicht ausbreiten, wobei auch die
Bereiche der festen Verbindung zwischen beiden Schlauchschichten aufgetrennt werden könnten. Das Ergebnis wäre also ein
mehr oder weniger starkes Loslösen der beiden Schlauchschichten voneinander, was den Gebrauch negativ beeinflussen würde.

Schließlich ist es auch noch wesentlich, daß die Schlauchkombination im derart geschaffenen Verbund miteinander aufgeweitet wird. Dadurch ist eine relativ einfache Handhabung möglich. Der Schrumpfeffekt wird auch in diesem Fall in erster
Linie durch die kompakte Schlauchschicht bewirkt. Die in sich
weitaus flexiblere geschäumte Schlauchschicht schließt sich
sowohl dem Aufweitvorgang als auch dem nachfolgenden Schrumpfvorgang ohne weiteres an, so daß hinsichtlich der geschäumten
Schlauchschicht keine besonderen Vorkehrungen getroffen werden
müssen.

Wenn die innere Schlauchschicht aus geschäumtem Kunststoffmaterial besteht, dann ist - aus den dargelegten Gründen - die
darauffolgende Schlauchschicht aus kompaktem Kunststoffmaterial aufgebaut. Im Rahmen der Erfindung sind auch Schlauchkombinationen mit umgekehrtem Schichtaufbau möglich.

Vorteilhaft ist das Dickenverhältnis der Schlauchschicht aus
kompaktem Kunststoffmaterial zur Schlauchschicht des geschäumten Kunststoffmaterials wenigstens mit 1:2 gehalten.

Je nach Gebrauchsweise und Einsatzzweck kann sich dieses Verhältnis verändern, wobei in erster Linie die Dicke der geschäumten Schlauchschicht vergrößert wird.

Die unterschiedlichen Schlauchschichten können durch Verschweißung oder durch Verklebung miteinander fest verbunden sein. Die Verbindung kann auch durch Koextrusion erfolgen. Die Schlauchschichten können aus dem gleichen Kunststoffmaterial bestehen, sie können jedoch auch aus unterschiedlichen Kunststoffen gestaltet sein. Im letzteren Fall ist es erforderlich, die Verschweißbarkeit der beiden Kunststoffschichten zu prüfen bzw. einen Kleber zu finden, der beide unterschiedlichen Kunststoffe fest miteinander verbindet. Derartige Überlegungen gehören jedoch zum Stand der Technik, so daß hier keine weiteren Ausführungen zu diesem Problemkreis notwendig sind.

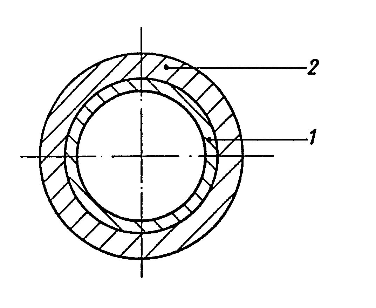

In der Zeichnung ist der Querschnitt einer Schlauchkombination gemäß der Erfindung schematisch dargestellt. Bei dieser Darstellung ist die Schlauchschicht aus kompaktem Kunststoffmaterial als innere Schlauchschicht 1 gezeigt, die fest mit der äußeren Schlauchschicht 2 aus geschäumtem Kunststoffmaterial verbunden ist. Die Darstellung zeigt in der unterschiedlichen Dicke der Schlauchschichten 1, 2, wie das Verhältnis untereinander ausgelegt ist. Die Schlauchschichten können auch in entgegengesetzter Weise angeordnet sein, so daß die äußere Schlauchschicht 2 aus kompaktem und die innere Schlauchschicht 1 aus geschäumtem Kunststoffmaterial gebildet ist.

- PATENTANSPRÜCHE -

## PATENTANSPRÜCHE

1. Mehrschichtiger Schrumpfschlauch aus Kunststoff zur Ummantelung von Substraten, wobei der aufgeweitete Schlauch durch Thermorückfederung wenigstens einer seiner Schichten auf dem zu ummantelnden Substrat festlegbar ist, dadurch gekennzeichnet, daß die eine Schlauchschicht aus geschäumtem Kunststoffmaterial besteht, während die andere Schlauchschicht aus kompaktem Kunststoffmaterial gebildet ist, daß beide Schlauchschichten durchgehend über den gesamten Schlauchumfang fest miteinander verbunden und im derart geschaffenen Verbund miteinander aufgeweitet sind.

2. Schrumpfschlauch nach Anspruch 1, dadurch gekennzeichnet, daß die innere Schlauchschicht aus geschäumtem Kunststoffmaterial und die äußere Schlauchschicht aus kompaktem Kunststoffmaterial besteht.

3. Schrumpfschlauch nach Anspruch 1, dadurch gekennzeichnet, daß die innere Schlauchschicht aus kompaktem Kunststoffmaterial und die äußere Schlauchschicht aus geschäumtem Kunststoffmaterial besteht.

4. Schrumpfschlauch nach Ansprüchen 1 bis 3, dadurch gekennzeichnet, daß das Dickenverhältnis der Schlauchschicht aus kompaktem Kunststoffmaterial zur Schlauchschicht aus geschäumtem Kunststoffmaterial wenigstens 1:2 beträgt.

5. Schrumpfschlauch nach Anspruch 1, dadurch gekennzeichnet, daß die unterschiedlichen Schlauchschichten durch Verschweißung miteinander verbunden sind.

Blatt 2

6. Schrumpfschlauch nach Anspruch 1, dadurch gekennzeichnet, daß die unterschiedlichen Schlauchschichten durch Verklebung miteinander verbunden sind.

7. Schrumpfschlauch nach Anspruch 1, dadurch gekennzeichnet, daß die unterschiedlichen Schlauchschichten koextrudiert sind.

0233516

1/1